# EUROPEAN PATENT SPECIFICATION

(11) **EP 1 757 862 B1**
(45) Date of publication and mention of the grant of the patent: **01.02.2012**
(21) Application number: 06117672.3
(22) Date of filing: 21.07.2006
(51) Int. Cl.: F24C 7/08

(54) **Microwave oven with improved temperature probe**
Mikrowellenofen mit verbessertem Temperaturfühler
Four à micro-ondes avec une sonde de température améliorée

(30) Priority: 23.08.2005 IT PN20050058
(43) Date of publication of application: 28.02.2007
(73) Proprietor: ELECTROLUX PROFESSIONAL S.p.A., 33170 Pordenone (IT)
(72) Inventor: Tassan Mangina, Franco, 33080, Marsure (Pordenone) (IT); Corai, Loris, 33083, Chions (Pordenone) (IT); Moretto, Gianni, 30027, S. Donà di Piave (Venezia) (IT)
(74) Representative: Markovina, Paolo

(56) References cited:
- WO-A1-93/16333
- DE-A1- 3 119 496
- DE-A1- 4 032 949
- GB-A- 2 113 871
- US-B1- 6 753 027

## Description

The present invention refers to an improved kind of food cooking oven, in particular adapted for professional-kitchen and mass-catering applications, provided with microwave-assisted cooking function.

While reference is made to a food cooking oven with microwave-assisted cooking oven throughout the following specification, the explanations given and the solutions illustrated in this connection shall be understood as equally and effectively applying to cooking ovens using combinations of heating energies, including microwaves, and even steam to cook food.

Largely known in the current practice is the use that is normally made in food cooking ovens of so-called core temperature probes, which are adapted to detect the temperature being reached inside, i.e. at the core of the food pieces being cooked, and which are intended to control the cooking process based on the so detected core temperature.

Actually, this feature proves quite useful and effective particularly when large and dense, i.e. compact masses of food are being treated in the oven, as this is the case when large pieces of meat are cooked, the core temperature of which must be monitored in a particularly accurate manner in view of determining the most appropriate moment at which the cooking process has to be brought to an end.

Used to such purpose are special temperature sensing devices in the form of needle-like probes, which substantially consist of a pointed stick to be inserted in the food being cooked, and within which there are provided one or more heat sensors.

These sensors are connected to appropriate processing, measurement and control means arranged within the cooking apparatus, but - clearly enough - outside the cooking cavity itself, via respective electric connections.

When said needle-like core temperature probe is inserted in the mass of the food to be cooked, whose core temperature is desirably to be detected, the possibility is therefore given for a corresponding plurality of electric signals to be obtained on said electric connections, which are univocally representative of the measured temperature, so that these signals can be properly acknowledged, i.e. recognized, processed and used in a variety of manners to a variety of purposes, as all those skilled in the art are well aware of.

If the oven is provided with a microwave or microwave-assisted cooking function, the electric field inside the cooking cavity may seriously interfere with the signal generated by the temperature sensors and issuing from said needle-like core temperature probe inserted in the food. Or, still worse, the portion of the needle-like core temperature probe passing through the outer surface portion of the food mass is strongly overheated, owing to its intercepting part of the electromagnetic energy being generated and delivered into the cooking cavity; as a result, the heat being generated on the needle-like core temperature probe converts into a considerable rise in the temperature thereof, which most obviously is then transferred by conduction exactly to said outer surface layer of the food.

In view of doing away with such drawback, the electric connection between the needle-like core temperature probe and the external measurement and signal-processing devices is screened with the help of shielding means that are largely known as such in the art, e.g. by means of a braided-wire or meshed-wire conductive sheath.

However, it may quite frequently occur that the intensity of the existing electric field is such as to still give rise to a number of problems of various kind, such as in particular connected to an overheating of the body of the needle-like core temperature probe that - apart to the overheating effect induced in the food mass in contact therewith - would of course grossly affect the accuracy of temperature measurements.

These and further problems and drawbacks are exhaustively described in US 3,975,720, from column 1 line 53 through to column 2 line 32, to which reference should therefore be made for a deeper insight.

As widely known in the art, these problems are generally solved in quite an adequate manner by providing a shielding sheath covering the connection cable of the needle-like core temperature probe, whose length - starting from the wall of the cooking cavity up to the portion of core-temperature probe rod containing the temperature probe - is exactly equal to nl/2, where n is an integer and 1 is the microwave propagation wavelength.

Such solution is exhaustively explained in the above-cited patent publication.

However, this solution - although generally effective - does not fully prevent an over-temperature of even quite elevated a value from being generated at or near the zone in which the needle-like core temperature probe is inserted in the food item.

Again, such circumstance - as anyone skilled in the art is well aware of - gives rise to even quite serious problems of the food becoming hard, charring or scorching, or drying up excessively at the probe introduction area.

These problems are recalled and set forth in detail even in US 3,991,615, column 1, to which reference should therefore be made for a deeper insight.

This patent publication also proposes a particular solution aimed at doing away with such drawbacks, wherein this solution substantially consists in providing a reflecting screen to be arranged at an appropriate distance on the core-temperature probe rod, so as to work as a shield preventing microwaves from affecting the probe introduction zone.

Such solution, therefore, is effective in solving the particular problem of the probe introduction zone being subject to overheating; however, it is not as effective in solving the more general problem that is brought about by the fact that -whether a core temperature probe is used or not - generating a very intense microwave field within the cooking cavity causes the mass or body of the food item being cooked to undergo a rather uneven heating, since the latter tends to be localized in the sole outermost surface layer, owing to microwaves being largely known to tend to penetrate the food at a gradually decreasing rate as they propagate into the food, i.e. the penetration strength of the microwaves to be strongly attenuated as they move deeper through the thickness of the food.

Under the circumstances, a quite frequently and commonly occurring problem may therefore arise in that the outer surface layer of the food item being cooked is heated up to even quite excessively high temperatures, to the point that the food item itself may become spoiled, while the innermost, i.e. core portion thereof remains at a much lower temperature.

In these conditions, therefore, even the presence of a needle-like core temperature probe provided with accurate temperature sensors and inserted correctly in the food item, will not be of any help; quite at the contrary, it may even affect, i.e. worsen the microwave cooking process itself, owing to its being in fact able to measure a very low temperature existing at the core of the food and, therefore, enable the cooking process to go on even if the outer surface layer of the food is already well done, i.e. cooked thoroughly and is also going to "char".

DE 3119496 discloses a microwave oven which in order to achieve a low temperature gradient between the surface and the centre of the food during heating, so as to prevent burning, overcooking or drying out of the surface of the food, comprises a spit-like food thermometer which has a plurality of temperature sensors at different layers of insertion, in particular also at the level of the surface of the food, which are used to control the temperatures.

It would therefore be desirable, and it is in fact a main object of the present invention to provide a food cooking oven with microwave or microwave-assisted cooking function, provided with means that are capable of detecting not only the temperature at the innermost, i.e. core portion of the food item being cooked, but also the temperature of the outer layer at the surface of the same food item, wherein said oven is further provided with control means that are adapted to control and adjust the microwave cooking process so as to prevent said outer surface layer of the food from undergoing overheating and, in particular, to enable a cooking process to be performed that is capable of ensuring sufficiently even heating throughout the different zones of the food item being cooked.

According to the present invention, these aims, along with further ones that will become apparent from the following disclosure, are reached in a food cooking oven incorporating the features as defined and recited in the appended claims.

Features and advantages of the present invention will anyway be more readily understood from the description that is given below by way of non-limiting example with reference to the accompanying drawings, in which:
- Figure 1 is a perspective front view of a food cooking oven of a generally known kind, as provided with a needle-like core temperature probe for detecting the temperature of the food being cooked;
- Figures 2 and 3 are respective conceptual views of a needle-like core temperature probe according to the present invention, as shown in different embodiments thereof;
- Figure 4 is an outer view of still another embodiment of a needle-like core temperature probe according to the present invention, as inserted within the cooking cavity of an oven.

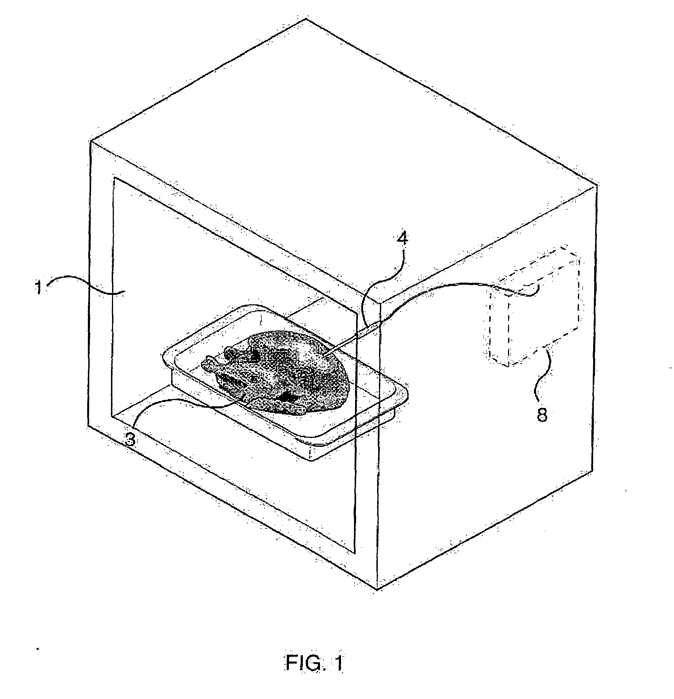

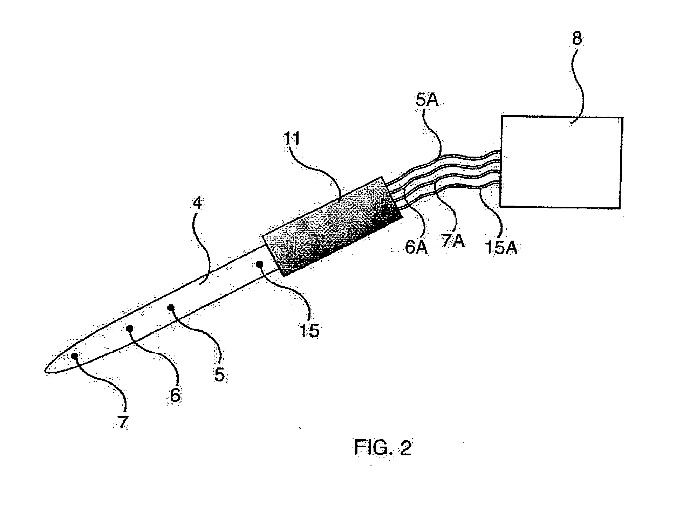

With reference to Figures 1 and 2, these illustrate a food cooking oven of a kind as generally known as such in the art, provided with a cooking cavity 1 and means (not shown) adapted to generate and irradiate microwaves for propagation within this cooking cavity.

Within this cooking cavity there is placed a compact mass of food 3, in which there has been inserted a movable core temperature probe 4 that is generally and preferably shaped in the form of an elongated, pointed rod containing - appropriately distributed thereinside - a number of temperature sensors 5, 6, 7.

These sensors are connected to control means 8, which are shown in a purely symbolical manner in the Figures, via respective electric wires 5A, 6A, 7A laid together in a single cable.

This needle-like core temperature probe 4 is further provided externally with a mechanical stop means 11 of the interference-fit kind, e.g. in the form of a step-like provision, situated in a position located just slightly ahead of the position of the first temperature sensor 5.

Such stop means may on the other hand be constituted even by the same microwave reflector 12, which is sometimes applied on the outside of the core temperature probe to generally known purposes.

The purpose of said mechanical stop means 11 is to identify the insertion depth of the needle-like core temperature probe at a pre-defined position within the food item to be cooked, and stop the probe penetration at such position, thereby practically preventing the same probe from being inserted to a depth beyond such pre-defined position.

The temperature sensors 5, 6, 7 are of course situated downstream from said mechanical stop means 11, so that the same sensors come to positively lie inside the mass of the food 3 after the core temperature probe has been duly inserted.

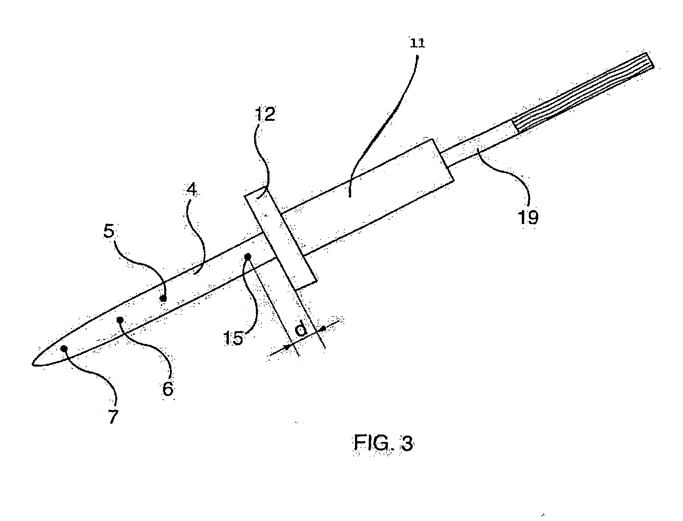

With reference to Figure 3, according to the present invention there is specially provided a temperature sensor 15 situated at a short distance d from said mechanical stop means 11, wherein said distance d represents the value of the starting depth at which the temperature has desirably to be measured within the food mass.

It will be readily appreciated that, if the temperature of the outermost layer or portion of the food mass has also to be measured in view of avoiding the afore-cited drawbacks, said distance d should most appropriately be assigned a correspondingly small value.

After the needle-like core temperature probe has been inserted in the food to be cooked and the microwave oven has been switched on, the invention works in the following way: the signal T issuing from said sensor 15 situated in the outermost region of the food item, which therefore corresponds to the food portion lying the closest to said stop means 11, is sent via a respective electric connection to said control means 8, which are in turn adapted to:
- receive said signal T,
- compare this signal with a pre-determined value To, which represents a temperature within the outer layer of the food item lying at a still acceptable value,
- working out an oven operating mode in accordance with the outcome of such comparison.

Therefore, the possibility is in this way given for the operation of the microwave oven to be governed and adjusted according to different control strategies, which can be defined in advance and appropriately stored in said control means.

In particular, if the signal received from said sensor is found to be representative of a temperature value that is lower than said pre-determined value To, then the oven is allowed to go on operating; if said signal is on the contrary found to be equal to or higher than said pre-determined value, then the oven operation is discontinued.

As an alternative to having the oven operation plainly discontinued, there may be identified a function enabling the microwave power output to be reduced in a controlled manner in inverse proportion to the level of said temperature signal T issued by the sensor, to the purpose of having the microwave power output more precisely graduated, i.e. fine-tuned according to the actual circumstances, while avoiding to completely cut off the oven operation.

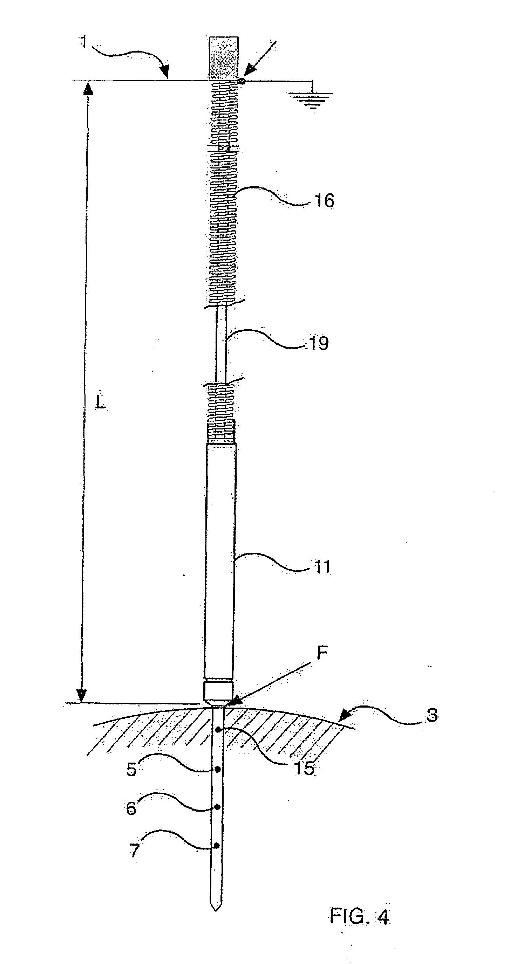

Advantageously, with reference to Figure 4, the above-described oven incorporates some features that may be specially implemented in view of still further enhancing the functionality of needle-like core temperature probes in general. In particular, the electric lead wires 5A, 6A, 7A and - of course - even 15A, which are used to connect the respective temperature sensors to the control means 8, are gathered and enclosed in a single cable which, with a length 19 thereof, runs of course inside the cooking cavity 1 of the oven. In view of avoiding electromagnetic interferences and overheating effects on the core temperature probe itself, the portion of cable that extends from said mechanical stop means 11 up to the wall of the cooking cavity 1 is enclosed in a metal sheath 16, the end portion of which facing the cooking cavity is electrically connected therewith.

A further improvement lies in the provision of an adjusting means (not shown and generally known as such in the art), by means of which an operator can modify from outside the numerical quantity of said pre-defined value To, so as to be able to still more completely and effectively control the temperature of the outer layer of the food being cooked.

Finally, another improvement that may be easily implemented is based on the practical consideration that - owing to the orientation of the probe relative to the food item to be measured (the probe may in fact be introduced diagonally, i.e. slantwise in the food) or even the actual size of the food item relative to the length of the probe - introducing a needle-like core temperature probe in a food item due to be cooked does not in all cases ensures that the farthest-located sensor in the rod of the probe, i.e. the sensor located at the tip of the probe rod, comes to actually lie at a site corresponding to the innermost portion of the food item and, accordingly, the specially provided sensor 15, which is located in the farthest-away position from the tip of the probe rod, comes to actually lie at a site corresponding to the outermost and, therefore, hottest portion of the food item.

In view of removing this condition of uncertainty, the above-cited improvement calls for all signals being sent by the various sensors 5, 6, 7, 15, etc. to be received and, after comparing them with each other, the signal corresponding to the highest temperature value to be selected. This signal shall then be considered as being the control temperature signal T to be compared with said pre-defined value To.

Then, once said "hottest" signal has in this way been identified and selected for further comparison, the operation of said control means and, for that matter, the entire oven goes on in the same way as described hereinbefore.

## Claims

1. Food cooking oven comprising:
- a cooking cavity (1), which can be accessed to through an oven door,
- means adapted to generate and irradiate microwaves for propagation inside said cooking cavity,
- control means (8) adapted to process signals received from external sources, and to govern said microwave generating and irradiating means for operation in accordance with the signals being received from said external sources,
- a movable temperature probe adapted to be introduced in the food item (3) placed inside said cooking cavity of the oven, and provided with a plurality of temperature sensors (5, 6, 7) that are distributed at pre-determined distances from each other along said movable probe, said sensors being electrically connected to said control means (8) to supply them with said signals from external sources, wherein said control means (8) are adapted to receive and process the control temperature signal (T) coming from a pre-determined one (15) of said sensors, and to modify the operation of said microwave generating and irradiating means if said control temperature signal (T) is found to have reached up to a pre-defined value (To),
**characterized in that**
said control means are adapted to receive and compare the signals relating to the temperatures being detected by said sensors, to identify the signal corresponding to the highest temperature, and to select and use this signal as the actual control temperature signal (T) to be compared with said pre-defined temperature value (T₀) for modifying the operating mode of said microwave generating and irradiating means accordingly.

2. Food cooking oven according to claim 1, **characterized in that** said control means (8) are adapted to receive and process the control temperature signal (T) coming from a pre-determined one (15) of said sensors, and to reduce the microwave power output as an inverse function of the temperature being detected and indicated by said control temperature signal (T).

3. Food cooking oven according to claim 1, **characterized in that** said modification of the operating mode of said microwave generating and irradiating means consists in causing the operation to be interrupted for a pre-determined period of time.

4. Food cooking oven according to claim 1 or 3, **characterized in that** it is provided with adjustment means adapted to selectively modify said pre-defined temperature value (T₀).

5. Food cooking oven according to any of the preceding claims, **characterized in that**:
- said movable probe is provided in the form of an elongated needle-like core temperature probe (4),
- said temperature sensors are accommodated inside said elongated needle-like core temperature probe, and are connected to said control means (8) via respective electric lead wires (5A, 6A, 7A, 15A) included in a single, common cable, a portion (19) of which is housed within said cooking cavity,
- said cable portion (19) is associated to a conductive sheath (16) that fully encloses it and is electrically connected with the inside wall of said cooking cavity (1),
- said sensors (5, 6, 7, 15) are distributed along the longitudinal dimension of said needle-like core temperature probe..

6. Method for operating a food cooking oven provided with microwave generating and irradiating means and with a movable temperature probe adapted to be introduced in a food item (3) placed inside said oven, said probe comprising a plurality of temperature sensors (5, 6, 7) distributed at pre-determined distances from each other along said probe, said sensors being electrically connected to control means (8) of said oven, said method comprising:
- receiving and processing a control temperature signal (T) coming from a pre-determined one of said sensors;
- modifying the operation of said microwave generating and irradiating means if said control temperature signal (T) has reached a pre-defined value (To),
**characterized in that** said method comprises:
- receiving and comparing the signals relating to the temperatures detected by said sensors,
- identify among said signals the one corresponding to the highest temperature, and selecting and using this signal as the actual control temperature signal (T) to be compared with said pre-defined temperature value (T₀) and modifying the operating mode of said microwave generating and irradiating means accordingly.

7. Method, according to claim 6 comprising reducing the microwave power output as an inverse function of the temperature detected and indicated by said control temperature signal (T) corresponding to said highest temperature.

8. Method according to claim 6 wherein modifying the operating mode of said microwave generating and irradiating means comprises causing the operation to be interrupted for a pre-determined period of time.

## Patentansprüche

1. Ofen zum Garen von Speisen, umfassend:
- einen Garraum (1), der durch eine Ofentür zugänglich ist,
- Mittel, die dazu eingerichtet sind, Mikrowellen zur Ausbreitung in dem Garraum zu erzeugen und auszustrahlen,
- Steuermittel (8), die dazu eingerichtet sind, von externen Quellen empfangene Signale zu verarbeiten, und die Mikrowellenerzeugungs- und -ausstrahlungsmittel zum Betrieb abhängig von den Signalen, die von den externen Quellen empfangen werden, zu steuern,
- eine bewegliche Temperatursonde, die dazu eingerichtet ist, in die Speise (3), die im Inneren des Garraums des Ofens angeordnet ist, eingeführt zu werden, und die mit einer Vielzahl von Temperatursensoren (5, 6, 7) versehen ist, die in vorbestimmten Abständen voneinander entlang der beweglichen Sonde verteilt sind, wobei die Sensoren elektrisch mit den Steuermitteln (8) verbunden sind, um ihnen die Signale der externen Quellen zuzuführen, wobei die Steuermittel (8) dazu eingerichtet sind, das Temperatursteuersignal (T), das von einem vorbestimmten (15) der Sensoren kommt, zu empfangen und den Betrieb der Mikrowellenerzeugungs- und -ausstrahlungsmittel zu modifizieren, wenn festgestellt wurde,
dass das Temperatursteuersignal (T) einen vorbestimmten Wert (T₀) erreicht hat,
**dadurch gekennzeichnet, dass**
die Steuermittel dazu eingerichtet sind, die Signale zu empfangen und zu vergleichen, die sich auf die von den Sensoren detektierten Temperaturen beziehen, dasjenige Signal zu identifizieren, das der höchsten Temperatur entspricht, und es als aktuelles Temperatursteuersignal (T) auszuwählen und zu verwenden, das mit dem vorbestimmten Temperaturwert (T₀) zu vergleichen ist, um den Betriebsmodus der Mikrowellenerzeugungs- und -ausstrahlungsmittel entsprechend zu modifizieren.

2. Ofen zum Garen von Speisen nach Anspruch 1, **dadurch gekennzeichnet, dass** die Steuermittel (8) dazu eingerichtet sind, das Temperatursteuersignal (T), das von einem vorbestimmten (15) der Sensoren kommt, zu empfangen und zu verarbeiten und die Mikrowellenausgangsleistung als Umkehrfunktion der detektierten und durch das Temperatursteuersignal (T) angezeigten Temperatur zu verringern.

3. Ofen zum Garen von Speisen nach Anspruch 1, **dadurch gekennzeichnet, dass** die Modifikation des Betriebsmodus der Mikrowellenerzeugungs- und -ausstrahlungsmittel darin besteht, den Betrieb für einen vorbestimmten Zeitraum zu unterbrechen.

4. Ofen zum Garen von Speisen nach Anspruch 1 oder 3, **dadurch gekennzeichnet, dass** er mit Einstellmitteln versehen ist, die dazu eingerichtet sind, den vorbestimmten Temperaturwert (T₀) selektiv zu modifizieren.

5. Ofen zum Garen von Speisen nach einem der vorhergehenden Ansprüche, **dadurch gekennzeichnet, dass**
- die bewegliche Sonde in Form einer länglichen, nadelförmigen Kerntemperatursonde (4) vorgesehen ist,
- die Temperatursensoren im Inneren der länglichen, nadelförmigen Kerntemperatursonde aufgenommen und mit den Steuermitteln (8) über entsprechende Stromleitungsdrähte (5A, 6A, 7A, 15A) verbunden sind, die in einem einzigen, gemeinsame Kabel aufgenommen sind, wobei ein Abschnitt (19) davon in dem Garraum untergebracht ist,
- der Kabelabschnitt (19) einer leitfähigen Ummantelung (16) zugeordnet ist, die ihn vollständig umschließt und elektrisch mit der Innenwand des Garraums (1) verbunden ist, und
- die Sensoren (5, 6, 7, 15) entlang der Längserstreckung der nadelförmigen Kerntemperatursonde verteilt sind.

6. Verfahren zum Betrieb eines Ofens zum Garen von Speisen, der mit Mikrowellenerzeugungs- und -ausstrahlungsmitteln und mit einer beweglichen Temperatursonde versehen ist, die dazu eingerichtet ist, in eine im Inneren des Ofens angeordnete Speise (3) eingeführt zu werden, wobei die Sonde eine Vielzahl von Temperatursensoren (5, 6, 7) umfasst, die in vorbestimmten Abständen voneinander entlang der Sonde angeordnet und elektrisch mit Steuermitteln (8) des Ofens verbunden sind, wobei das Verfahren die Schritte umfasst:
- Empfangen und Verarbeiten eines Temperatursteuersignals (T), das von einem vorbestimmten der Sensoren kommt,
- Modifizieren des Betriebs der Mikrowellenerzeugungs- und -ausstrahlungsmittel, wenn das Temperatursteuersignal (T) einen vorbestimmten Wert (T₀) erreicht hat,
**dadurch gekennzeichnet, dass** das Verfahren zudem die Schritte umfasst:
- Empfangen und Vergleichen der Signale, die sich auf die von den Sensoren detektierten Temperaturen beziehen,
- Identifizieren desjenigen Signals, das der höchsten Temperatur entspricht, und Auswählen und Verwenden dieses Signals als aktuelles Temperatursteuersignal (T), das mit dem vorbestimmten Temperaturwert (T₀) zu vergleichen ist, und entsprechendes Modifizieren des Betriebsmodus der Mikrowellenerzeugungs- und -ausstrahlungsmittel.

7. Verfahren nach Anspruch 6, umfassend das Verringern der Mikrowellenausgangsleistung als Umkehrfunktion der detektierten und durch das Temperatursteuersignal (T) angezeigten Temperatur, die der höchsten Temperatur entspricht.

8. Verfahren nach Anspruch 6, wobei das Modifizieren des Betriebsmodus der Mikrowellenerzeugungs- und -ausstrahlungsmittel umfasst, dass der Betrieb für einen vorbestimmten Zeitraum unterbrochen wird.

## Revendications

1. Four pour la cuisson d'aliments comprenant :
- une cavité de cuisson (1), qui est accessible par une porte de four,
- des moyens adaptés pour générer et irradier des micro-ondes pour une propagation à l'intérieur de ladite cavité de cuisson,
- des moyens de commande (8) adaptés pour traiter des signaux reçus de sources extérieures, et pour régler lesdits moyens de génération et d'irradiation de micro-ondes afin qu'ils fonctionnent en conformité avec les signaux reçus desdites sources extérieures,
- une sonde de température mobile adaptée pour être introduite dans l'article alimentaire (3) placé dans ladite cavité de cuisson du four, et équipée d'une pluralité de capteurs de température (5, 6, 7) qui sont distribués à des distances prédéterminées les uns des autres le long de ladite sonde mobile, lesdits capteurs étant connectés électriquement auxdits moyens de commande (8) pour leur fournir lesdits signaux à partir de sources extérieures, où lesdits moyens de commande (8) sont adaptés pour recevoir et traiter le signal de température de commande (T) venant de l'un prédéterminé (15) desdits capteurs, et pour modifier le fonctionnement desdits moyens de génération et d'irradiation de micro-ondes si ledit signal de température de commande (T) se trouve avoir atteint une valeur prédéterminée (T₀),
**caractérisé en ce que**
lesdits moyens de commande sont adaptés pour recevoir et comparer les signaux en lien avec les températures détectées par lesdits capteurs, pour identifier le signal correspondant à la température la plus élevée, et pour sélectionner et utiliser ce signal comme signal de température de commande réelle (T) à comparer avec ladite valeur de température prédéfinie (T₀) pour modifier le mode de fonctionnement dudit moyen de génération et d'irradiation en conséquence.

2. Four pour la cuisson d'aliments selon la revendication 1, **caractérisé en ce que** lesdits moyens de commande (8) sont adaptés pour recevoir et traiter le signal de température de commande (T) venant de l'un prédéterminé (15) desdits capteurs et pour réduire la puissance de sortie de micro-ondes comme fonction inverse de la température étant détectée et indiquée par ledit signal de température de commande (T).

3. Four pour la cuisson d'aliments selon la revendication 1, **caractérisé en ce que** ladite modification du mode de fonctionnement desdits moyens de génération et d'irradiation de micro-ondes consiste à entraîner une interruption du fonctionnement pour une durée prédéterminée.

4. Four pour la cuisson d'aliments selon la revendication 1 ou 3, **caractérisé en ce qu'**il est doté de moyens d'ajustement adaptés pour modifier sélectivement ladite valeur de température prédéfinie (T₀).

5. Four pour la cuisson d'aliments selon l'une quelconque des revendications précédentes, **caractérisé en ce que**:
- ladite sonde mobile a la forme d'une sonde de température à coeur allongée en forme d'aiguille (4),
- lesdits capteurs de température sont logés dans ladite sonde de température à coeur allongée en forme d'aiguille, et sont connectés auxdits moyens de commande (8) via des fils conducteurs électriques (5A, 6A, 7A, 15A) respectifs inclus dans un câble commun unique, une portion (19) de celui-ci étant logée dans ladite cavité de cuisson,
- ladite portion de câble (19) est associée à une gaine conductrice (16) qui l'enferme complètement et est électriquement connectée avec la paroi interne de ladite cavité de cuisson (1),
- lesdits capteurs (5, 6, 7, 15) sont distribués le long de la dimension longitudinale de ladite sonde de température de coeur en forme d'aiguille.

6. Procédé d'exploitation d'un four pour la cuisson de nourriture doté de moyens de génération et d'irradiation de micro-ondes et comprenant une sonde de température mobile adaptée pour être introduite dans un article alimentaire (3) placé à l'intérieur dudit four, ladite sonde comprenant une pluralité de capteurs de température (5, 6, 7) distribués à des distances prédéterminées les uns des autres le long de ladite sonde, lesdits capteurs étant électriquement connectés à des moyens de commande (8) dudit four, ledit procédé comprenant les étapes consistant à :
- recevoir et traiter un signal de température de commande (T) venant de l'un prédéterminé desdits capteurs ;
- modifier le fonctionnement desdits moyens de génération et d'irradiation de micro-ondes si ledit signal de température de commande (T) atteint une valeur prédéterminée (T₀),
**caractérisé en ce que** ledit procédé comprend les étapes consistant à :
- recevoir et comparer les signaux se rapportant aux températures détectées par lesdits capteurs,
- identifier parmi lesdits signaux celui correspondant à la température la plus élevée, et sélectionner et utiliser ce signal comme signal de température de commande (T) réel à comparer avec ladite valeur de température prédéfinie (T₀) et modifier le mode de fonctionnement desdits moyens de génération et d'irradiation de micro-ondes en conséquence.

7. Procédé selon la revendication 6, comprenant l'étape consistant à réduire la puissance de sortie de micro-ondes comme une fonction inverse de la température détectée et indiquée par ledit signal de commande de température (T) correspondant à la température la plus élevée.

8. Procédé selon la revendication 6, dans lequel la modification du mode de fonctionnement desdits moyens de génération et d'irradiation de micro-ondes comprend le fait d'entraîner l'interruption du fonctionnement pour une durée prédéterminée.
